# EUROPEAN PATENT APPLICATION

(11) **EP 4 799 985 A1**
(43) Date of publication of application: **02.09.2026**
(21) Application number: 24882249.6
(22) Date of filing: 15.10.2024
(51) Int. Cl.: C03B 5/235, B01D 53/22, F23D 14/66, F23D 17/00, F23D 23/00, F23K 5/00, F23L 7/00

(54) **GLASS MANUFACTURING APPARATUS AND GLASS MANUFACTURING METHOD**

(30) Priority: 23.10.2023 JP 2023181582
(71) Applicant: AGC Inc., Chiyoda-ku Tokyo 100-8405 (JP)
(72) Inventor: SUZUKI, Yudai, Tokyo 100-8405 (JP); MAEHARA, Terutaka, Tokyo 100-8405 (JP); TANAKA, Toshiyuki, Tokyo 100-8405 (JP)
(74) Representative: Müller-Boré & Partner Patentanwälte PartG mbB
(86) International application number: PCT/JP2024/036702
(87) International publication number: WO 2025/089136

(57) **Abstract**

A glass manufacturing apparatus includes a reactor configured to produce at least H₂ gas through decomposition of NH₃ gas, and a burner configured to form a flame inside a glass melting furnace by combusting a flammable gas containing the H₂ gas produced in the reactor and an oxidizing gas.

## Description

### TECHNICAL FIELD

The present disclosure relates to a glass manufacturing apparatus and a glass manufacturing method.

### BACKGROUND ART

A glass manufacturing apparatus includes a burner configured to form a flame inside a glass melting furnace. The burner forms a flame by combusting a flammable gas and an oxidizing gas. The flammable gas is, for example, natural gas. The natural gas contains CH₄ gas as a main component. The oxidizing gas is, for example, pure oxygen gas or air. The flame heats glass raw materials and molten glass obtained by melting the glass raw materials.

In order to reduce the amount of CO₂ gas emitted from a glass melting furnace, the use of H₂ gas as the flammable gas has been considered. In addition, in order to reduce the amount of CO₂ gas emitted from a general industrial furnace, the use of NH₃ gas as the flammable gas has also been considered (see, for example, Patent Document 1 and Non-Patent Document 1). NH₃ gas can be liquefied more easily than H₂ gas and is superior to H₂ gas in transportability. However, NH₃ gas has a lower flame temperature and a slower combustion speed than H₂ gas.

### Citation List

### Patent Document

Patent Document 1: Japanese Unexamined Patent Application, First Publication No. 2022-114242

### Non Patent Document

Non Patent Document 1: Narimasa Hattori, "Introduction to the development of ammonia combustion technology for decarbonization of industrial furnaces," [online], October 2022, [searched October 23, 2023], Internet <URL: https://chugai.co.jp/wp/wp-content/uploads/2022/10/2210giroku.pdf>

### SUMMARY OF INVENTION

### Technical Problem

Non-Patent Document 1 describes that under limited conditions, it is possible to increase the temperature inside the furnace up to 1200 °C by combusting NH₃ gas. However, the temperature inside a glass melting furnace is usually about 1500 °C. Therefore, the use of NH₃ gas as the flammable gas for a glass melting furnace has not been considered until now.

The present disclosure provides a glass manufacturing apparatus and a glass manufacturing method using NH₃ gas as a flammable gas.

### Solution to Problem

According to one embodiment of the present disclosure, there is provided a glass manufacturing apparatus including a reactor configured to produce at least H₂ gas through decomposition of NH₃ gas, and a burner configured to form a flame inside a glass melting furnace by combusting a flammable gas containing the H₂ gas produced in the reactor and an oxidizing gas.

### Advantageous Effects of Invention

According to the embodiment of the present disclosure, at least H₂ gas is produced through the decomposition of NH₃ gas, and the flammable gas containing the produced H₂ gas and the oxidizing gas are burned by the burner. As a result, it is possible to melt glass raw materials with combustion heat.

### BRIEF DESCRIPTION OF DRAWINGS

[FIG. 1] A diagram showing a glass manufacturing apparatus according to one embodiment.
[FIG. 2] A diagram showing a glass manufacturing apparatus according to a modification example.
[FIG. 3] A diagram showing an example of a change in enthalpy ΔH.
[FIG. 4] A diagram showing an example of the heat balance in a glass melting furnace.
[FIG. 5] A table showing the heat balance for Examples 1 to 9.
[FIG. 6] A table showing the heat balance for Examples 10 to 18.
[FIG. 7] A table showing an example of the relationship between a combustion formula, a heating value, and a H₂O concentration.
[FIG. 8] A diagram showing a first embodiment of the glass manufacturing apparatus that includes a first regenerator and a second regenerator.
[FIG. 9] A diagram showing a second embodiment of the glass manufacturing apparatus that includes a first regenerator and a second regenerator.
[FIG. 10] A diagram showing a third embodiment of the glass manufacturing apparatus that includes a first regenerator and a second regenerator.
[FIG. 11] A diagram showing a fourth embodiment of a glass manufacturing apparatus that includes a first regenerator and a second regenerator.
[FIG. 12] A diagram showing the first embodiment of the glass manufacturing apparatus that includes a recuperator.
[FIG. 13] A diagram showing the second embodiment of the glass manufacturing apparatus that includes a recuperator.

### DESCRIPTION OF EMBODIMENTS

Hereinafter, embodiments of the present disclosure will be described with reference to the drawings. In each drawing, the same or corresponding constituent elements are designated by the same reference signs, and the description thereof may be omitted. In this specification, the use of "to" indicating a numerical range means that the numerical values described before and after "to" are included as a lower limit value and an upper limit value.

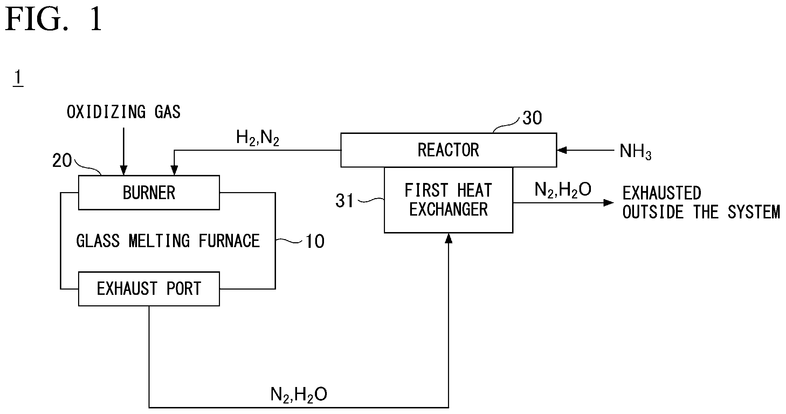

A glass manufacturing apparatus 1 according to one embodiment will be described with reference to FIG. 1. The glass manufacturing apparatus 1 includes a glass melting furnace 10. The glass melting furnace 10 accommodates a glass raw material and molten glass obtained by melting the glass raw material. The molten glass is removed from the glass melting furnace 10, and then is formed into a desired shape and slowly cooled. As a result, a glass product is obtained.

The glass raw material is prepared by mixing a plurality of types of materials. The glass raw material may include a fining agent. The glass raw material may include glass cullet in order to recycle the glass. The glass raw material may be a powder raw material or a granulated raw material obtained by granulating a powder raw material. The glass raw material is determined depending on the composition of the glass product.

The glass melting furnace 10 is made of a refractory brick. The refractory brick includes, for example, an electroformed zirconia brick, an electroformed alumina brick, an electroformed alumina-zirconia brick, an electroformed AZS (Al-Zr-Si) brick, a dense fired brick, and the like. The glass melting furnace 10 may be made of a plurality of types of refractory bricks.

The temperature inside the glass melting furnace 10 is preferably higher than 1200 °C, more preferably 1300 °C or higher, and even more preferably 1500 °C or higher, in order to melt the glass raw material. From the viewpoint of the heat resistance of the refractory brick, the temperature inside the glass melting furnace 10 is preferably 2500 °C or less, and more preferably 2000 °C or less.

The glass manufacturing apparatus 1 includes a burner 20. The burner 20 forms a flame inside the glass melting furnace 10. The flame heats the glass raw material and the molten glass. The glass raw material is added to the liquid surface of the molten glass from above and forms a layer on at least a portion of the liquid surface. The glass raw material gradually melts into the molten glass. Although only one burner 20 is shown in FIG. 1, there are usually a plurality of burners.

The glass manufacturing apparatus 1 may also use a plurality of electrodes (not shown) as heat sources. The plurality of electrodes apply an AC voltage to the molten glass and thus electrically heats the molten glass. In this case, the molten glass itself generates heat. In addition, the glass manufacturing apparatus 1 may use an electric heater (not shown) as a heat source. The electric heater generates heat by itself. The glass manufacturing apparatus 1 may comprise at least the burner 20 as a heat source.

The burner 20 forms a flame by combusting a flammable gas and an oxidizing gas. In the present embodiment, NH₃ gas (more specifically, H₂ gas obtained through decomposition of NH₃ gas, as will be described below) is used as at least a portion of the flammable gas. By using NH₃ gas, the amount of CO₂ gas generated and therefore the amount of CO₂ gas emitted can be reduced compared to a case in which CH₄ gas is used.

As at least a portion of the flammable gas, NH₃ gas may be used, and natural gas may be used in combination therewith. Since natural gas contains CH₄ gas as a main component, it is preferable to use as little natural gas as possible. From the viewpoint of reducing the amount of CO₂ gas generated, the amount of natural gas used is preferably 0% by volume to 50% by volume, more preferably 0% by volume to 25% by volume, and even more preferably 0% by volume.

NH₃ gas can be liquefied more easily than H₂ gas and is superior to H₂ gas in transportability. However, NH₃ gas has a lower flame temperature and a slower combustion speed than H₂ gas. Therefore, the glass manufacturing apparatus 1 of the present embodiment includes a reactor 30. The reactor 30 produces at least H₂ gas through decomposition of NH₃ gas. The decomposition of NH₃ gas is also called cracking of NH₃ gas. The decomposition of NH₃ gas is expressed by the following formula (1).

(1) NH₃ + 46.2 [kJ/mol] → 1/2N₂ + 3/2H₂

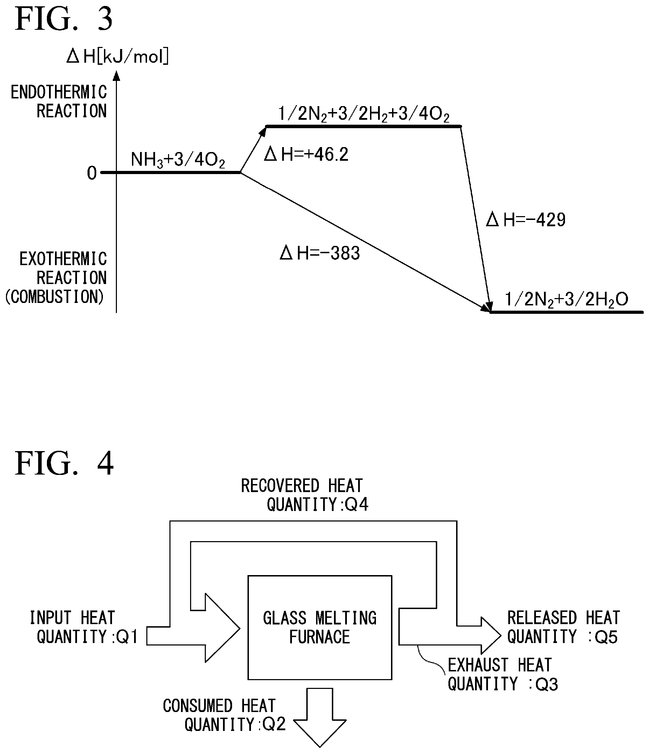

From the above formula (1), it can be seen that the decomposition of NH₃ gas is an endothermic reaction. A product of the endothermic reaction (a mixed gas of N₂ gas and H₂ gas) potentially contains a larger amount of heat than a reactant of the endothermic reaction (NH₃ gas). An example of the change in enthalpy ΔH (kJ/mol) is shown in FIG. 3. As is clear from FIG. 3, by combusting the product of the endothermic reaction (the mixed gas of N₂ gas and H₂ gas), it is possible to obtain a larger amount of combustion heat than by combusting the reactant of the endothermic reaction (NH₃ gas). The heat-related values shown in FIGS. 3 and 5 to 7 have been calculated assuming that the energy of each substance at 25 °C is zero.

The burner 20 forms a flame inside the glass melting furnace 10 by combusting the flammable gas containing H₂ gas produced in the reactor 30 and the oxidizing gas. According to the present embodiment, at least H₂ gas is produced through the decomposition of NH₃ gas, and the flammable gas containing the produced H₂ gas and the oxidizing gas are burned. As a result, it is possible to obtain a large amount of combustion heat, and it is possible to melt the glass raw material with the combustion heat.

In a case in which the decomposition ratio of NH₃ gas is 100%, that is, in a case in which all of the NH₃ gas is decomposed into N₂ gas and H₂ gas, a mixed gas containing 25% by volume of N₂ gas and 75% by volume of H₂ gas is generated. Most of this mixed gas is H₂ gas. Therefore, if this mixed gas is supplied to the burner 20, it is possible to convert a hydrogen combustion burner for use as the burner 20. From the viewpoint of conversion of the hydrogen combustion burner, the decomposition ratio of NH₃ gas is preferably 80% to 100%, and more preferably 90% to 100%.

In a case in which the decomposition ratio of NH₃ gas is 50%, that is, in a case in which 50% of the NH₃ gas is decomposed into N₂ gas and H₂ gas, a mixed gas containing 33.3% by volume of NH₃ gas, 16.7% by volume of N₂ gas, and 50.0% by volume of H₂ gas is generated. The combustion speed of this mixed gas is approximately the same as the combustion speed of CH₄ gas. Therefore, if this mixed gas is supplied to the burner 20, it is possible to convert a methane combustion burner for use as the burner 20. From the viewpoint of conversion of the methane combustion burner, the decomposition ratio of NH₃ gas is preferably 20% or more and less than 80%.

The reactor 30 may be equipped with a catalyst to improve the decomposition rate of NH₃ gas. The catalyst is, for example, a metal catalyst. The metal catalyst includes at least one of Ru (ruthenium), Ni (nickel), Co (cobalt), and Fe (iron). By increasing the decomposition rate of NH₃ gas, it is also possible to reduce the size of the reactor 30.

The flammable gas that is supplied from the reactor 30 to the burner 20 may comprise at least H₂ gas, and may further comprise N₂ gas. However, N₂ gas may be separated and removed on the way from the reactor 30 toward the burner 20. In addition, the flammable gas that is supplied from the reactor 30 to the burner 20 may contain undecomposed NH₃ gas.

The glass manufacturing apparatus 1 preferably recovers heat from an exhaust gas exhausted from the glass melting furnace 10 and promotes the decomposition of NH₃ gas using the recovered heat. The exhaust gas includes a combustion gas. The combustion gas is a gas remaining after a combustion reaction of the flammable gas and the oxidizing gas. The flammable gas may include a component that does not contribute to the combustion, for example, N₂ gas. The combustion gas may also include a component that does not contribute to the combustion, for example, N₂ gas.

By recovering heat from the exhaust gas, the energy consumption per unit of the molten glass can be reduced. The energy consumption per unit is the consumption amount of energy that is input from outside a system to manufacture one ton of molten glass. For example, as shown in FIG. 1, the glass manufacturing apparatus 1 includes a first heat exchanger 31 as a heat recovery means. The first heat exchanger 31 is provided in the reactor 30. The first heat exchanger 31 heats the NH₃ gas through heat exchange with the exhaust gas. The first heat exchanger 31 transfers heat from the exhaust gas to the NH₃ gas without mixing the exhaust gas with the NH₃ gas. An apparatus that serves as both the first heat exchanger 31 and the reactor 30 may be provided. Such a apparatus may include, for example, a shell-and-tube type heat exchanger, a plate type heat exchanger, or a radiant type heat exchanger.

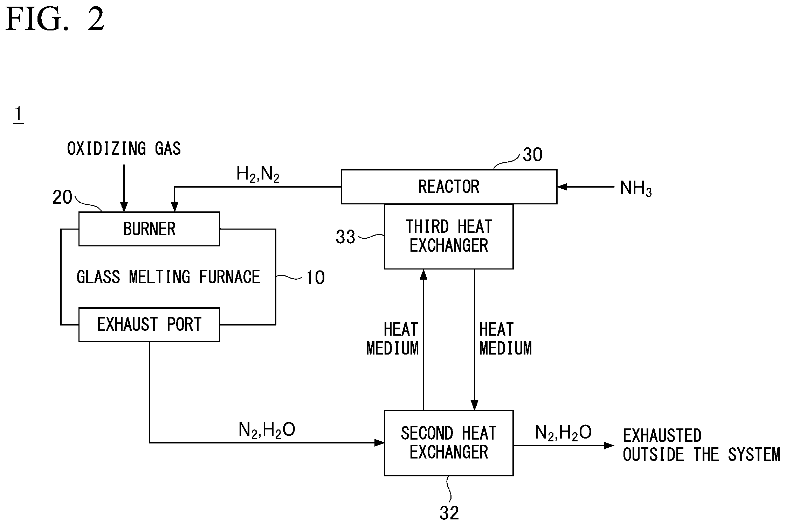

As shown in FIG. 2, the glass manufacturing apparatus 1 may include a secondheat exchanger 32 and a third heat exchanger 33 as heat recovery means. The second heat exchanger 32 heats a heat medium through heat exchange with the exhaust gas. The second heat exchanger 32 transfers heat from the exhaust gas to the heat medium without mixing the exhaust gas with the heat medium. The heat medium may be a gas or a liquid. As the gas, for example, air or water vapor may be used. As the liquid, for example, molten salt or oil may be used. The third heat exchanger 33 is provided in the reactor 30 and heats the NH₃ gas through heat exchange with the heat medium. The third heat exchanger 33 transfers heat from the heat medium to the NH₃ gas without mixing the heat medium with the NH₃ gas.

In addition, as will be described in detail below, the glass manufacturing apparatus 1 preferably recovers heat from the exhaust gas exhausted from the glass melting furnace 10 and preheats the oxidizing gas using the recovered heat. By recovering heat from the exhaust gas, the energy consumption per unit can be reduced. As the heat recovery means, a recuperator or a regenerator, which will be described below, is used.

It does not matter which of the heat for preheating the oxidizing gas and the heat for decomposing NH₃ gas is recovered from the exhaust gas first. If the temperature of the reaction of formula (1) is 400 °C or higher, 99% or more of NH₃ gas is decomposed at equilibrium. NH₃ gas can be decomposed at low temperatures. Therefore, after the heat for preheating the oxidizing gas is recovered from the exhaust gas, the heat for decomposing NH₃ gas may be recovered from the exhaust gas.

From the viewpoint of improving the decomposition rate and decomposition ratio of NH₃ gas, the temperature of the reactor 30 is preferably 400 °C or higher, and more preferably 500 °C or higher. In addition, from the viewpoint of the heat resistance of the reactor 30, the temperature of the reactor 30 is preferably 1500 °C or less, more preferably 1300 °C or less, and even more preferably 1200 °C or less.

Next, an example of the heat balance in the glass melting furnace 10 will be described with reference to FIG. 4. An input heat quantity Q1 is the amount of heat input from outside the system of the glass manufacturing apparatus 1 into the system, and is the amount of heat generated by the burner 20 combusting the flammable gas and the oxidizing gas. A consumed heat quantity Q2 includes the amount of heat consumed in melting the glass raw material, the amount of heat taken out by the molten glass from the inside of the glass melting furnace 10 to the outside, and the amount of heat consumed in maintaining the temperature inside the glass melting furnace 10. The glass melting furnace 10 loses heat through the outside air. An exhaust heat quantity Q3 is the amount of heat taken out by the exhaust gas from the inside of the glass melting furnace 10 to the outside. The exhaust gas includes a combustion gas. A recovered heat quantity Q4 is the amount of heat which is returned to the glass melting furnace 10, out of the exhaust heat quantity Q3. A released heat quantity Q5 is the amount of heat which is not returned to the glass melting furnace 10 but is discarded outside the system of the glass manufacturing apparatus 1, out of the exhaust heat quantity Q3.

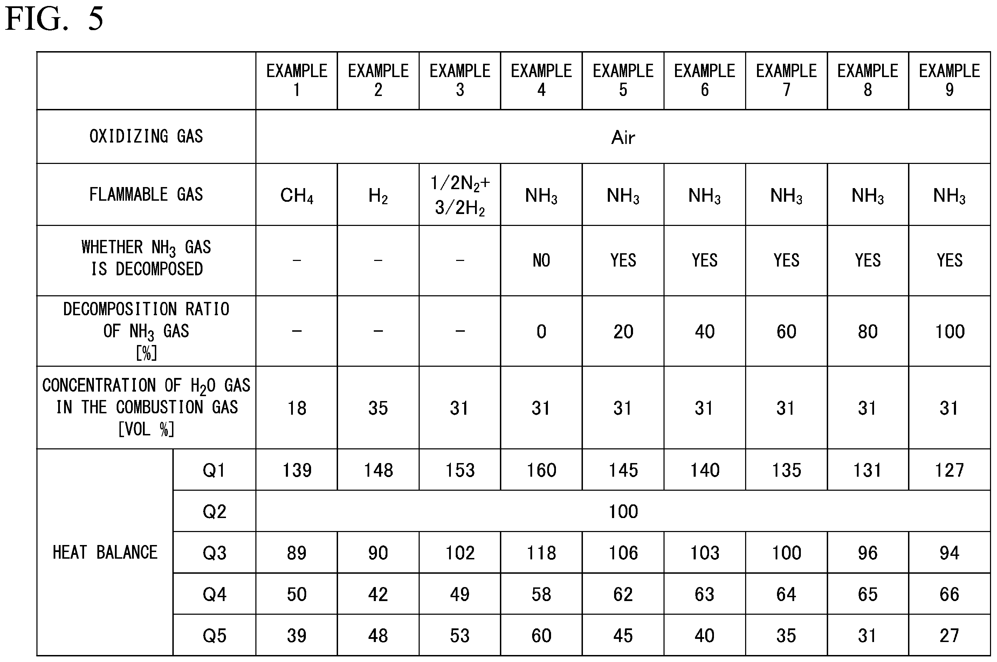

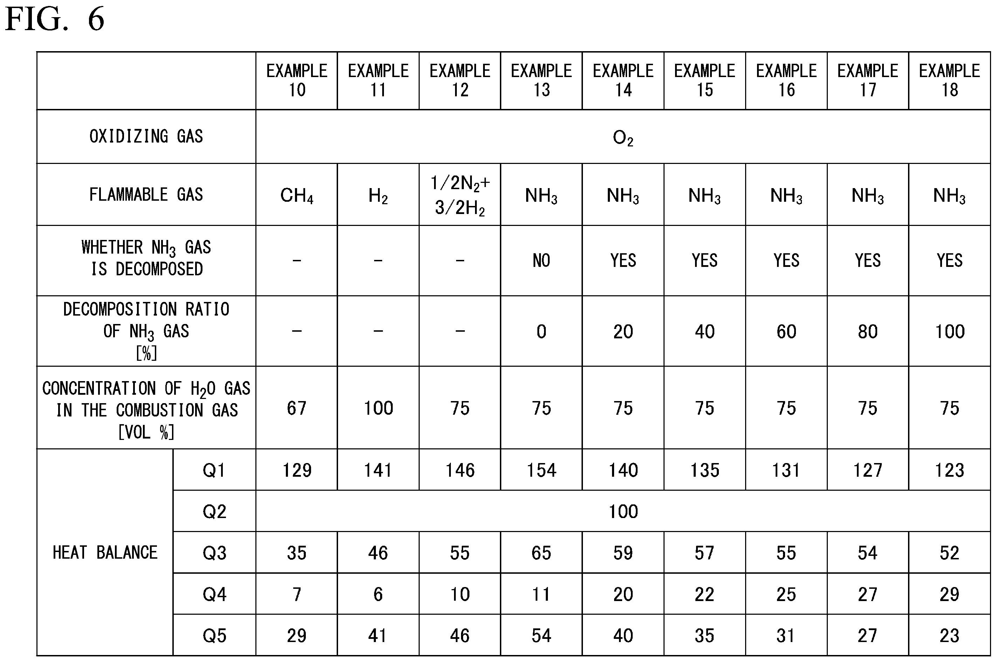

The sum (Q1 + Q4) of the input heat quantity Q1 and the recovered heat quantity Q4 is the amount of heat input to the glass melting furnace 10. The sum (Q1 + Q4) of the input heat quantity Q1 and the recovered heat quantity Q4 is equal to the sum (Q2 + Q3) of the consumed heat quantity Q2 and the exhaust heat quantity Q3. When Q2 is set to 100, Q1, Q3, Q4 and Q5 are as shown in FIGS. 5 and 6. The reason why Q2 is set to 100 is that Q2 does not depend on the type of flammable gas, the type of oxidizing gas, whether or not NH₃ gas is decomposed, and the decomposition ratio of NH₃ gas. The smaller Q1 is, the smaller the energy consumption per unit is and the better the energy efficiency is.

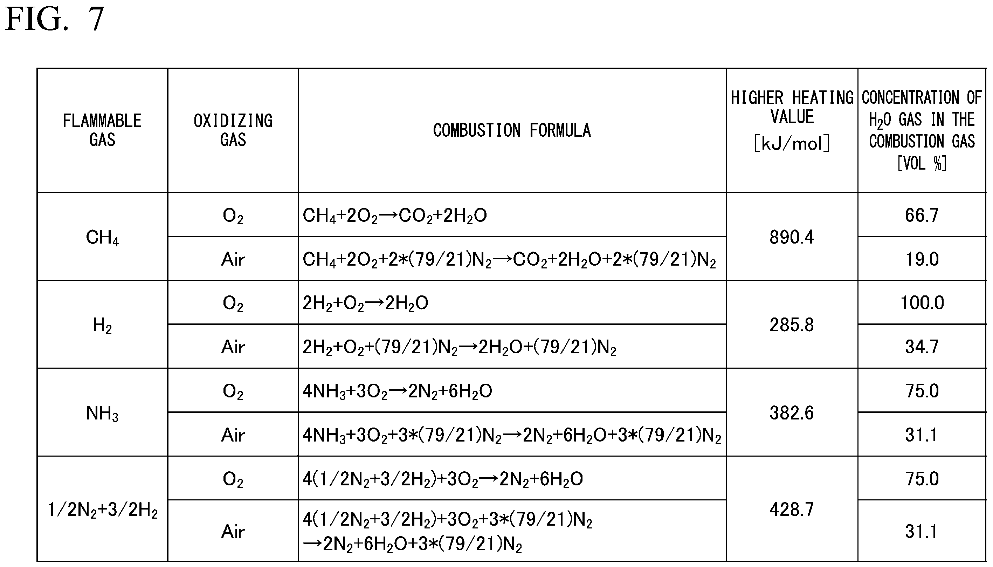

The input heat quantity Q1 is calculated on the basis of a combustion formula and a higher heating value shown in FIG. 7. The exhaust heat quantity Q3 is assumed to be equal to the amount of heat released in the process of cooling the exhaust gas from 1500 °C to 25 °C, and is calculated from the heat capacity and temperature difference of the exhaust gas. The temperature inside the glass melting furnace 10 is usually about 1500 °C. The exhaust gas is assumed to consist of the combustion gas only. The recovered heat quantity Q4 includes the amount of heat amount for preheating the oxidizing gas and the amount of heat used for heating and decomposing NH₃ gas. The oxidizing gas is, for example, air, oxygen-enriched air, or pure oxygen gas.

Air used as the oxidizing gas is usually preheated to about 1200 °C in a regenerator. On the other hand, pure oxygen gas used as the oxidizing gas is usually preheated to about 800 °C in a recuperator. The regenerator is primarily made of a brick, while the recuperator is primarily made of a metal. The heat resistance temperature of the recuperator is lower than that of the regenerator. Therefore, the preheat temperature of pure oxygen gas is lower than the preheat temperature of air.

The amount of heat for preheating air is assumed to be equal to the amount of heat required to heat air from 25 °C to 1200 °C, and is calculated from the heat capacity and temperature difference of air. In addition, the amount of heat for preheating pure oxygen gas is assumed to be equal to the amount of heat required to heat pure oxygen gas from 25 °C to 800°C, and is calculated from the heat capacity and temperature difference of pure oxygen gas. It is assumed that the heat loss occurring in the process of preheating air or pure oxygen gas is zero.

The amount of heat used for preheating NH₃ gas is assumed to be equal to the amount of heat required to heat NH₃ gas from 25 °C to 500 °C, and is calculated from the heat capacity and temperature difference of NH₃ gas. If NH₃ gas is heated to about 500 °C, 99% or more of NH₃ gas is decomposed at equilibrium. The amount of heat used for decomposing NH₃ gas is calculated on the basis of the decomposition ratio of NH₃ gas and the amount of heat absorption in formula (1). It is assumed that the heat loss occurring in the process of heating and decomposing NH₃ gas is zero.

The released heat quantity Q5 is assumed to be equal to a difference (Q3 - Q4) between the exhaust heat quantity Q3 and the recovered heat quantity Q4, and is calculated. The recovered heat quantity Q4 is the amount of heat which is returned to the glass melting furnace 10, out of the exhaust heat quantity Q3. The released heat quantity Q5 is the amount of heat which is not returned to the glass melting furnace 10 but is discarded outside the system of the glass manufacturing apparatus 1, out of the exhaust heat quantity Q3. Therefore, Q5 is equal to the difference (Q3 - Q4).

The concentration (% by volume) of H₂O in the combustion gas is calculated on the basis of the combustion formula shown in FIG. 7 and the concentration (% by volume) of O₂ in the oxidizing gas. In a case in which air is used as the oxidizing gas, it is assumed that air contains 79% by volume of N₂ gas and 21% by volume of O₂ gas.

As shown in FIGS. 5 and 6, Examples 2 and 11 differ from Examples 1 and 12 in that H₂ gas is used as the flammable gas instead of CH₄ gas. When H₂ gas is burned, H₂O gas is generated through the reaction between H₂ gas and O₂ gas, and no CO₂ gas is generated. However, since no CO₂ gas is generated, the concentration of H₂O gas in the furnace atmosphere increases. This is particularly noticeable in a case in which pure oxygen gas is used as the oxidizing gas. In a case in which pure oxygen gas is used, the concentration of H₂O gas in the furnace atmosphere can theoretically be 100% by volume.

The glass raw material may release a gas during melting. For example, in a case in which the glass raw material contains carbonates such as calcium carbonate or magnesium carbonate, the glass raw material will release CO₂ gas during melting. Therefore, the concentration of H₂O gas in the furnace atmosphere is actually less than 100% by volume.

If the concentration of H₂O gas in the furnace atmosphere is too high, NaOH gas derived from Na contained in the molten glass is likely to be generated, which is likely to corrode a furnace material such as a brick. Alternatively, if the concentration of H₂O gas in the furnace atmosphere is too high, the concentration of moisture included in the molten glass may be too high, resulting in poor glass quality.

If air is used as the oxidizing gas instead of pure oxygen gas, the concentration of H₂O gas in the furnace atmosphere can be reduced. In this case, since N₂ gas, which occupies most of the air, does not contribute to the combustion, a large amount of air is used and a large amount of exhaust gas is exhausted from the glass melting furnace 10. In order to recover heat from a large amount of exhaust gas, a regenerator is provided next to the glass melting furnace 10.

On the other hand, if pure oxygen gas is used as the oxidizing gas, the oxidizing gas does not contain N₂ gas. Therefore, the amount of exhaust gas exhausted is small and the regenerator is not required, and thus the degree of freedom in designing the glass melting furnace 10 is increased. In addition, the N₂ gas, which does not contribute to the combustion, is not heated unnecessarily, and the glass can be efficiently heated with the combustion heat. Furthermore, the production of NOx gas can be suppressed.

However, if pure oxygen gas is used as the oxidizing gas, the concentration of H₂O gas in the furnace atmosphere will be higher than a case in which air is used. In a case in which oxygen-enriched air is used as the oxidizing gas instead of pure oxygen gas, the H₂O gas concentration is also higher than a case in which air is used. Oxygen-enriched air is a mixed gas of pure oxygen gas and air, and has a higher oxygen gas concentration than air.

As shown in FIGS. 5 and 6, in Examples 3 and 12, a mixed gas containing H₂ gas and N₂ gas in a ratio of 3:1 is used as the flammable gas instead of CH₄ gas. By diluting H₂ gas with N₂ gas, the concentration of H₂O gas in the furnace atmosphere is lower than that in Examples 2 and 11. However, by diluting H₂ gas with N₂ gas, the released heat quantity Q5 increases and the input heat quantity Q1 increases compared to Examples 2 and 11.

In Examples 4 and 13, NH₃ gas is used as the flammable gas instead of CH₄ gas. When NH₃ gas is burned, no CO₂ gas is generated, similarly to when a mixed gas containing H₂ gas and N₂ gas in a ratio of 3:1 is burned. In Examples 4 and 13, the concentration of H₂O gas in the furnace atmosphere is lower than that in Examples 2 and 11. However, in Examples 4 and 13, the released heat quantity Q5 increases and the input heat quantity Q1 increases compared to Examples 2 and 11.

As is clear from Examples 1 to 4 and Examples 10 to 13, in the related art, it has been difficult to simultaneously reduce the concentration of H₂O gas in the furnace atmosphere and reduce the input heat quantity Q1 (that is, improve fuel efficiency).

The concentration of H₂O gas in the furnace atmosphere is mainly determined by the types of flammable gas and oxidizing gas, although it also depends on the type of glass raw material. Therefore, in the present embodiment, the concentration of H₂O gas in the combustion gas is adopted as a parameter to be managed.

From the viewpoint of the quality of the glass product and the corrosion of the furnace material, the concentration of H₂O gas in the combustion gas is preferably 75% by volume or less, and more preferably 67% by volume or less. In the related art, the molten glass has been manufactured by combusting CH₄ gas and O₂ gas (pure oxygen gas), and it has been checked that there are no problems with the quality of the glass product and the corrosion of the furnace material as long as the concentration of H₂O gas in the combustion gas is 67% by volume or less. In addition, the concentration of H₂O gas in the combustion gas is preferably close to the concentration of H₂O gas in the combustion gas of the glass products of the related art (Examples 1 and 10) in order to eliminate any difference in quality from the glass products of the related art (Examples 1 and 10). The concentration of H₂O in the combustion gas is preferably 18% or more to eliminate any difference in quality from the glass products of the related art (Examples 1 and 10).

As shown in FIGS. 5 and 6, in Examples 5 to 9 and Examples 14 to 18, NH₃ gas is heated and decomposed. The heat recovered from the exhaust gas is used to heat and decompose the NH₃ gas. Therefore, the recovered heat quantity Q4 can be increased, and the released heat quantity Q5 and the input heat quantity Q1 can be reduced. As shown in FIGS. 5 and 6, it is possible to reduce the released heat quantity Q5 and the input heat quantity Q1 compared to a case in which CH₄ gas or H₂ gas is used. According to Examples 5 to 9 and Examples 14 to 18, not only it is possible to reduce the concentration of H₂O gas in the combustion gas, but also it is possible to reduce the input heat quantity Q1 (that is, it is possible to improve the fuel efficiency), compared to Examples 2 and 11.

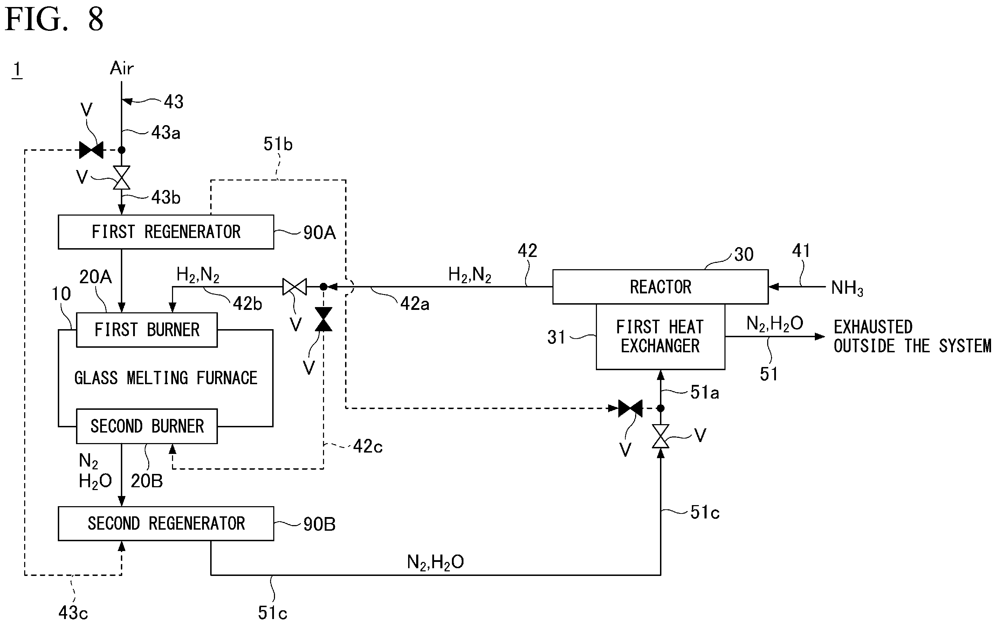

A first embodiment of the glass manufacturing apparatus 1 that includes a first regenerator 90A and a second regenerator 90B will be described with reference to FIG. 8. Hereinafter, the differences from the glass manufacturing apparatus 1 shown in FIG. 1 will be mainly described. The glass manufacturing apparatus 1 includes a glass melting furnace 10, a first burner 20A, a second burner 20B, a reactor 30, a first regenerator 90A, and a second regenerator 90B. Although the number of first regenerators 90A is one in FIG. 8, there may be a plurality of first regenerators 90A. Similarly, the number of second regenerators 90B, the number of first burners 20A, and the number of second burners 20B may be one or more. The oxidizing gas is preferably air or oxygen-enriched air.

The first burner 20A and the second burner 20B alternately form a flame inside the glass melting furnace 10. FIG. 8 is a diagram showing a state in which the first burner 20A forms a flame inside the glass melting furnace 10. In FIG. 8, the gas flow indicated by the solid line indicates the gas flow when the first burner 20A forms a flame inside the glass melting furnace 10. In FIG. 8, the gas flow indicated by the dashed line indicates the gas flow when the second burner 20B forms a flame inside the glass melting furnace 10. In FIG. 8, the color of an opening/closing damper V being white means that the opening/closing damper V is opening the gas flow path, and the color of the opening/closing damper V being black means that the opening/closing damper V is closing the gas flow path.

The first regenerator 90A recovers heat from the exhaust gas exhausted from the glass melting furnace 10 while the second burner 20B forms a flame inside the glass melting furnace 10. The heat of the exhaust gas is accumulated in the hearth of the first regenerator 90A or the like. The first regenerator 90A releases the previously recovered heat to preheat the oxidizing gas while the first burner 20A forms a flame inside the glass melting furnace 10. The first burner 20A forms a flame inside the glass melting furnace 10 by combusting the oxidizing gas preheated in the first regenerator 90A and the flammable gas transformed in the reactor 30. The first burner 20A has a nozzle for injecting the flammable gas and a port for discharging the oxidizing gas. The port exhausts the exhaust gas into the first regenerator 90A while the second burner 20B forms a flame inside the glass melting furnace 10.

Similarly, the second regenerator 90B recovers heat from the exhaust gas exhausted from the glass melting furnace 10 while the first burner 20A forms a flame inside the glass melting furnace 10. The heat of the exhaust gas is accumulated in the hearth of the second regenerator 90B or the like. The second regenerator 90B releases the previously recovered heat to preheat the oxidizing gas while the second burner 20B forms a flame inside the glass melting furnace 10. The second burner 20B forms a flame inside the glass melting furnace 10 by combusting the oxidizing gas preheated in the second regenerator 90B and the flammable gas transformed in the reactor 30. The second burner 20B has a nozzle for injecting the flammable gas and a port for discharging the oxidizing gas. The port exhausts the exhaust gas into the second regenerator 90B while the first burner 20A forms a flame inside the glass melting furnace 10.

The glass manufacturing apparatus 1 includes a first supply line 41, a second supply line 42, a third supply line 43, and an exhaust line 51. The first supply line 41 supplies the NH₃ gas to the reactor 30. The second supply line 42 supplies the flammable gas containing the H₂ gas produced in the reactor 30 from the reactor 30 to a burner (for example, the first burner 20A or the second burner 20B). The third supply line 43 supplies the oxidizing gas to a burner (for example, the first burner 20A or the second burner 20B). The exhaust line 51 exhausts the exhaust gas from the inside of the glass melting furnace 10 to the outside.

The second supply line 42 alternately supplies the flammable gas to the first burner 20A and the second burner 20B. The second supply line 42 includes, for example, a common line 42a and two individual lines 42b and 42c that branch off from the downstream end of the common line 42a. An opening/closing damper V is provided in the middle of each of the two individual lines 42b and 42c. One individual line 42b sends the flammable gas from the common line 42a to the first burner 20A. Another individual line 42c sends the flammable gas from the common line 42a to the second burner 20B.

The third supply line 43 alternately supplies the oxidizing gas to the first burner 20A and the second burner 20B. The third supply line 43 includes, for example, a common line 43a and two individual lines 43b and 43c that branch off from the downstream end of the common line 43a. An opening/closing damper V is provided in the middle of each of the two individual lines 43b and 43c. One individual line 43b sends the oxidizing gas from the common line 43a to the first burner 20A. Another individual line 43c sends the oxidizing gas from the common line 43a to the second burner 20B.

The exhaust line 51 alternately exhausts the exhaust gas from the first regenerator 90A and the second regenerator 90B. The exhaust line 51 has two individual lines 51b and 51c and a common line 51a extending from a point where the downstream ends of the two individual lines 51b and 51c join together. An opening/closing damper V is provided in the middle of each of the two individual lines 51b and 51c. One individual line 51b sends the exhaust gas from the first regenerator 90A to the common line 51a. Another individual line 51c sends the exhaust gas from the second regenerator 90B to the common line 51a.

The common line 51a of the exhaust line 51 sends the exhaust gas exhausted from the first regenerator 90A and the second regenerator 90B to a first heat exchanger 31. The first heat exchanger 31 is provided in the reactor 30 and heats the NH₃ gas through heat exchange with the exhaust gas. The first heat exchanger 31 transfers heat from the exhaust gas to the NH₃ gas without mixing the exhaust gas with the NH₃ gas. The exhaust line 51 exhausts the exhaust gas exhausted from the first heat exchanger 31 outside the system of the glass manufacturing apparatus 1. It is also possible to recover heat from the exhaust gas exhausted outside the system and use the recovered heat in another apparatus.

The glass manufacturing apparatus 1 of the present embodiment includes the first heat exchanger 31 as a recovery means for recovering heat for decomposing the NH₃ gas from the exhaust gas. However, the glass manufacturing apparatus 1 may include the second heat exchanger 32 and the third heat exchanger 33 shown in FIG. 2 instead of the first heat exchanger 31. In addition, the common line 51a may be omitted, and two individual lines 51b and 51c may send the exhaust gas to the first heat exchanger 31 or the second heat exchanger 32.

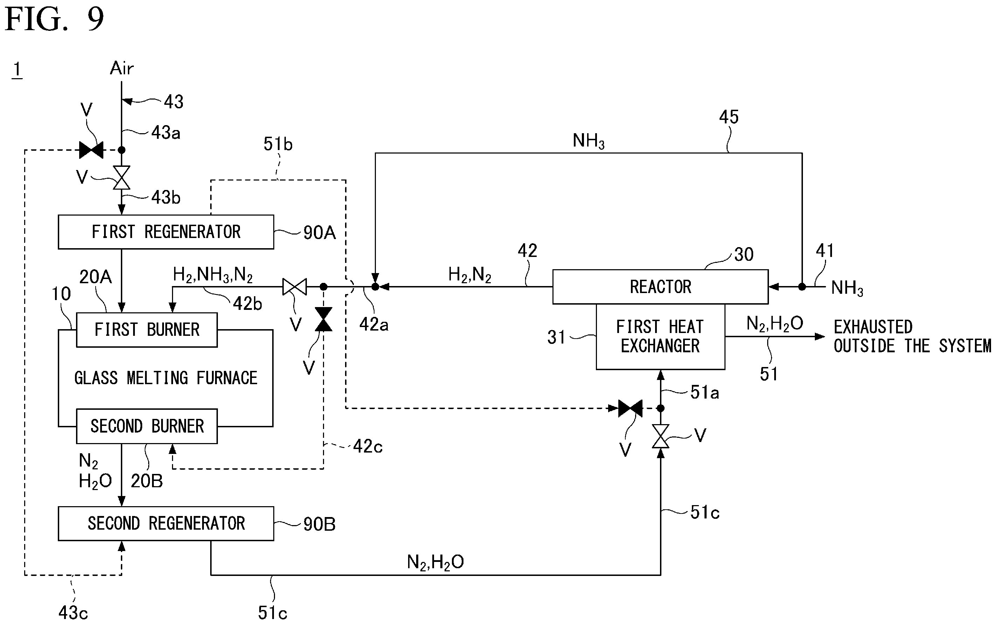

A second embodiment of the glass manufacturing apparatus 1 that includes a first regenerator 90A and a second regenerator 90B will be described with reference to FIG. 9. Hereinafter, the differences from the glass manufacturing apparatus 1 shown in FIG. 8 will be mainly described. As shown in FIG. 9, the glass manufacturing apparatus 1 may include a fourth supply line 45 in addition to the first supply line 41 and the second supply line 42. The fourth supply line 45 sends the NH₃ gas to the second supply line 42 without passing through the reactor 30. The decomposition ratio of NH₃ gas can be adjusted by the fourth supply line 45. For example, even if the decomposition ratio of NH₃ gas in the reactor 30 is approximately 100%, undecomposed NH₃ gas can be supplied to the first burner 20A and the second burner 20B. In the present embodiment, the fourth supply line 45 is a bypass line that branches off from the first supply line 41, and bypasses the reactor 30, and joins the second supply line 42, but the fourth supply line 45 does not have to be a bypass line. In other words, the fourth supply line 45 may be provided independently of the first supply line 41 without branching off from the first supply line 41.

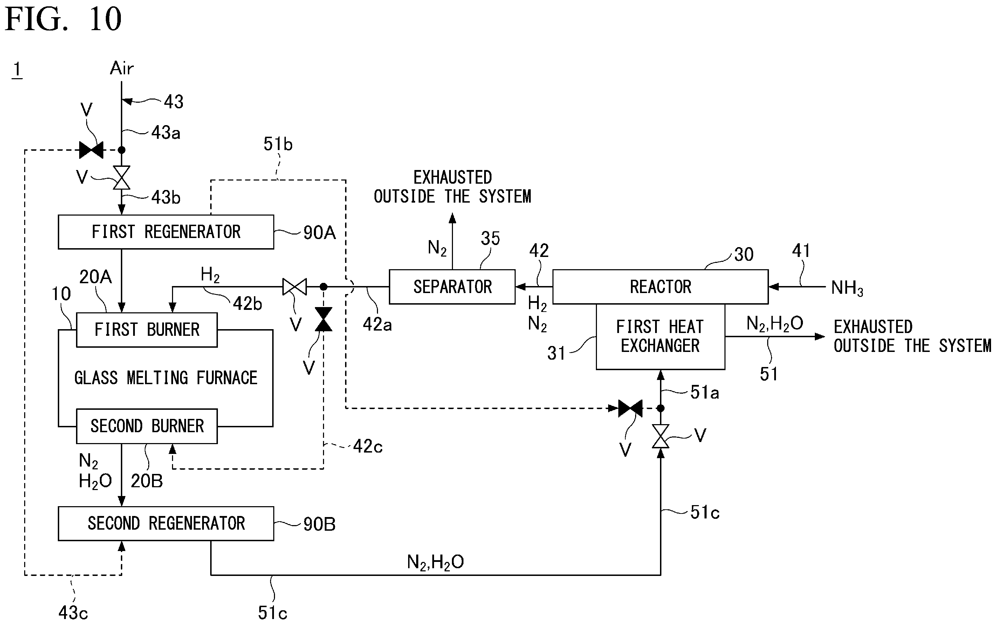

A third embodiment of the glass manufacturing apparatus 1 that includes a first regenerator 90A and a second regenerator 90B will be described with reference to FIG. 10. Hereinafter, the differences from the glass manufacturing apparatus 1 shown in FIG. 8 will be mainly described. As shown in FIG. 10, the glass manufacturing apparatus 1 may include a separator 35. The separator 35 is provided in the middle of the second supply line 42 and removes at least some of the N₂ gas produced in the reactor 30. The separator 35 includes, for example, a separation membrane. The separation membrane allows, for example, H₂ gas to pass therethrough but blocks N₂ gas from passing therethrough. Before the flammable gas and the oxidizing gas are combusted by the first burner 20A or the second burner 20B, the N₂ gas that does not contribute to combustion can be removed. The N₂ gas, which does not contribute to the combustion, is not heated unnecessarily, and the glass can be efficiently heated with the combustion heat. Furthermore, the production of NOx gas can be suppressed.

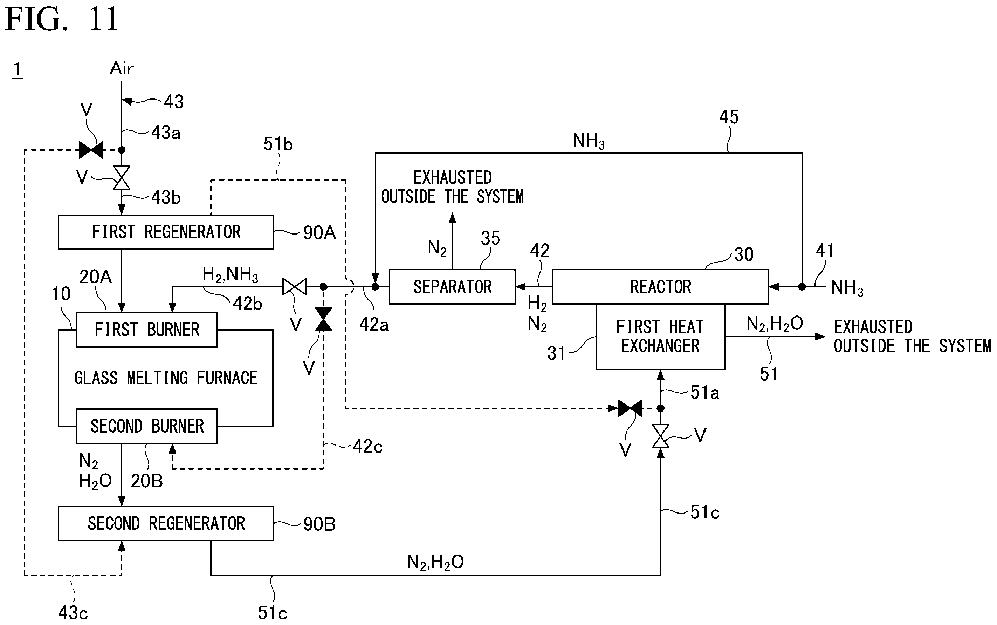

A fourth embodiment of the glass manufacturing apparatus 1 that includes a first regenerator 90A and a second regenerator 90B will be described with reference to FIG. 11. Hereinafter, the differences from the glass manufacturing apparatus 1 shown in FIG. 8 will be mainly described. As shown in FIG. 11, the glass manufacturing apparatus 1 may include a fourth supply line 45 and a separator 35. The fourth supply line 45 sends the NH₃ gas to a portion of the second supply line 42 downstream of the separator 35 (closer to the burner than the separator 35) without passing through the reactor 30 and the separator 35. The fourth supply line 45 does not have to bypass the separator 35. However, if the fourth supply line 45 bypasses the separator 35, even if the separator 35 removes the NH₃ gas along with the N₂ gas, it is possible to supply the undecomposed NH₃ gas to the first burner 20A and the second burner 20B. In the present embodiment, the fourth supply line 45 is a bypass line that branches off from the first supply line 41, and bypasses the reactor 30 and the separator 35, and joins a portion of the second supply line 42 downstream of the separator 35 (closer to the burner than the separator 35), but the fourth supply line 45 does not have to be a bypass line. In other words, the fourth supply line 45 may be provided independently of the first supply line 41 without branching off from the first supply line 41.

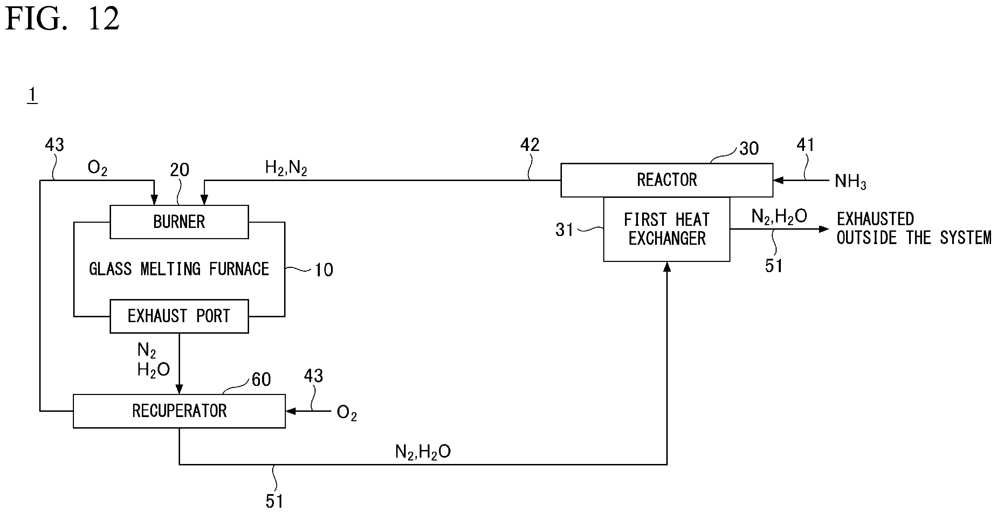

The first embodiment of the glass manufacturing apparatus 1 that includes a recuperator 60 will be described with reference to FIG. 12. The glass manufacturing apparatus 1 includes a glass melting furnace 10, a burner 20, a reactor 30, and a recuperator 60. Hereinafter, the differences from the glass manufacturing apparatus 1 shown in FIG. 1 will be mainly described.

The recuperator 60 preheats the oxidizing gas through heat exchange with the exhaust gas exhausted from the glass melting furnace 10. The oxidizing gas is preferably pure oxygen gas or oxygen-enriched air. The recuperator 60 transfers heat from the exhaust gas to the oxidizing gas without mixing the exhaust gas with the oxidizing gas. The heat recovered from the exhaust gas can be used effectively, and thus the energy consumption per unit can be reduced.

Although the recuperator 60 is provided outside the glass melting furnace 10 in FIG. 12, the recuperator 60 may be provided inside the glass melting furnace 10. One or more recuperators 60 (one in FIG. 12) are provided. The recuperator 60 is provided at a point where the third supply line 43 and the exhaust line 51 intersect. The third supply line 43 supplies the oxidizing gas preheated in the recuperator 60 to the burner 20. The burner 20 forms a flame inside the glass melting furnace 10 by combusting the oxidizing gas preheated in the recuperator 60 and the flammable gas transformed in the reactor 30.

The exhaust line 51 sends the exhaust gas exhausted from the recuperator 60 to the first heat exchanger 31. The first heat exchanger 31 is provided in the reactor 30 and heats the NH₃ gas through heat exchange with the exhaust gas. The first heat exchanger 31 transfers heat from the exhaust gas to the NH₃ gas without mixing the exhaust gas with the NH₃ gas. The exhaust line 51 exhausts the exhaust gas exhausted from the first heat exchanger 31 outside the system of the glass manufacturing apparatus 1. It is also possible to recover heat from the exhaust gas exhausted outside the system and use the recovered heat in another apparatus.

The glass manufacturing apparatus 1 of the present embodiment includes the first heat exchanger 31 as a recovery means for recovering heat for decomposing the NH₃ gas from the exhaust gas. However, the glass manufacturing apparatus 1 may include the second heat exchanger 32 and the third heat exchanger 33 shown in FIG. 2 instead of the first heat exchanger 31.

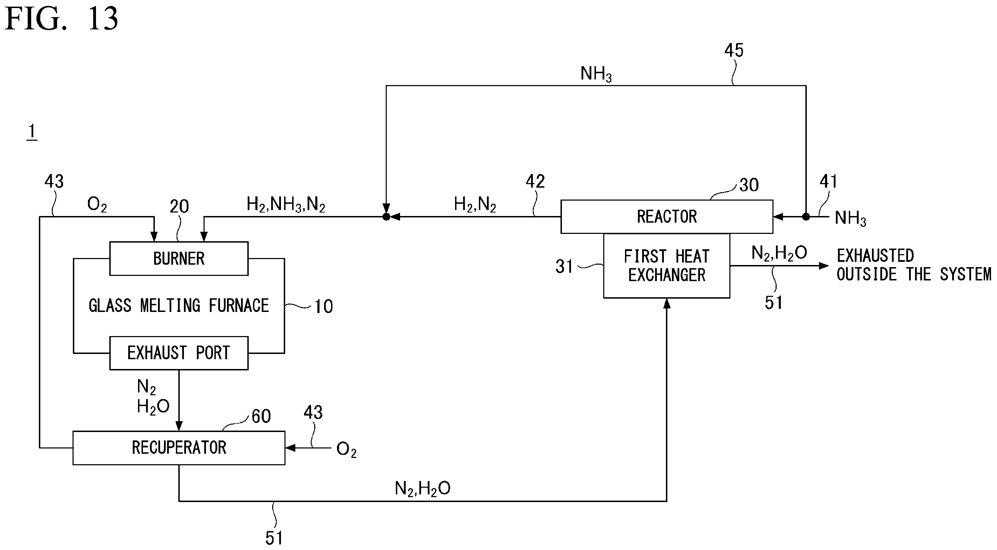

The second embodiment of the glass manufacturing apparatus 1 that includes a recuperator 60 will be described with reference to FIG. 13. The glass manufacturing apparatus 1 includes a glass melting furnace 10, a burner 20, a reactor 30, and a recuperator 60. Hereinafter, the differences from the glass manufacturing apparatus 1 shown in FIG. 12 will be mainly described. As shown in FIG. 13, the glass manufacturing apparatus 1 may include a fourth supply line 45 in addition to the first supply line 41 and the second supply line 42. The fourth supply line 45 sends the NH₃ gas to the second supply line 42 without passing through the reactor 30. The decomposition ratio of NH₃ gas can be adjusted by the fourth supply line 45. For example, even if the decomposition ratio of NH₃ gas in the reactor 30 is approximately 100%, undecomposed NH₃ gas can be supplied to the burner 20.

In a case in which the oxidizing gas is pure oxygen gas or oxygen-enriched air, the concentration of H₂O in the combustion gas tends to be higher than a case in which the oxidizing gas is air (see FIGS. 5 and 6). In a case in which the recuperator 60 is used as the heat recovery means, pure oxygen gas or oxygen-enriched air is usually used as the oxidizing gas. Therefore, in a case in which the recuperator 60 is used as the heat recovery means, it is preferable that the separator 35 shown in FIGS. 10 and 11 is not provided in the middle of the second supply line 42 from the viewpoint of reducing the concentration of H₂O in the combustion gas.

The following appendixes are disclosed regarding the above-described embodiments.
[Appendix 1] A glass manufacturing apparatus comprising:
   a reactor configured to produce at least H₂ gas through decomposition of NH₃ gas; and
   a burner configured to form a flame inside a glass melting furnace by combusting a flammable gas containing the H₂ gas produced in the reactor and an oxidizing gas.
[Appendix 2] The glass manufacturing apparatus according to claim 1, further comprising a first heat exchanger provided in the reactor heating the NH₃ gas through heat exchange with an exhaust gas exhausted from the glass melting furnace.
[Appendix 3] The glass manufacturing apparatus according to claim 1, further comprising:
   a second heat exchanger heating a heat medium through heat exchange with an exhaust gas exhausted from the glass melting furnace; and
   a third heat exchanger provided in the reactor heating the NH₃ gas through heat exchange with the heat medium.
[Appendix 4] The glass manufacturing apparatus according to any one of appendixes 1 to 3, further including a first regenerator and a second regenerator,
   wherein the burner has a first burner and a second burner that alternately form a flame inside the glass melting furnace,
   wherein the first regenerator recovers heat from an exhaust gas exhausted from the glass melting furnace while the second burner forms a flame inside the glass melting furnace, and the first regenerator releases heat to preheat the oxidizing gas while the first burner forms a flame inside the glass melting furnace, and
   wherein the second regenerator recovers heat from an exhaust gas exhausted from the glass melting furnace while the first burner forms a flame inside the glass melting furnace, and the second regenerator releases heat to preheat the oxidizing gas while the second burner forms a flame inside the glass melting furnace.
[Appendix 5] The glass manufacturing apparatus according to appendix 4, wherein the oxidizing gas is air or oxygen-enriched air.
[Appendix 6] The glass manufacturing apparatus according to any one of appendixes 1 to 3, further including:
   a third supply line for supplying the oxidizing gas to the burner; and
   a recuperator provided in the middle of the third supply line and preheats the oxidizing gas through heat exchange with an exhaust gas exhausted from the glass melting furnace.
[Appendix 7] The glass manufacturing apparatus according to appendix 6, wherein the oxidizing gas is pure oxygen gas or oxygen-enriched air.
[Appendix 8] The glass manufacturing apparatus according to any one of appendixes 1 to 7, wherein a concentration of H₂O gas in a combustion gas burned by the burner is 18% by volume to 75% by volume.
[Appendix 9] The glass manufacturing apparatus according to any one of appendixes 1 to 8, further including:
   a first supply line for supplying the NH₃ gas to the reactor;
   a second supply line for supplying the flammable gas produced in the reactor to the burner; and
   a fourth supply line for sending the NH₃ gas to the second supply line without passing through the reactor.
[Appendix 10] The glass manufacturing apparatus according to any one of claims 1 to 3, further comprising:
   a first supply line for supplying the NH₃ gas to the reactor;
   a second supply line for supplying the flammable gas produced in the reactor to the burner; and
   a separator provided in the middle of the second supply line removing at least some of N2 gas produced in the reactor.
[Appendix 11] The glass manufacturing apparatus according to any one of claims 1 to 3, further comprising:
   a first supply line for supplying the NH₃ gas to the reactor;
   a second supply line for supplying the flammable gas produced in the reactor to the burner;
   a separator provided in the middle of the second supply line removing at least some of N2 gas produced in the reactor; and
   a fourth supply line for sending the NH₃ gas to a portion of the second supply line downstream of the separator without passing through the reactor and the separator.
[Appendix 12] A glass manufacturing method including:
   producing at least H₂ gas through decomposition of NH₃ gas; and
   forming a flame inside a glass melting furnace by combusting a flammable gas containing the produced H₂ gas and an oxidizing gas with a burner.
[Appendix 13] The glass manufacturing method according to appendix 12, further including recovering heat from an exhaust gas exhausted from the glass melting furnace and heating the NH₃ gas using the recovered heat to decompose the NH₃ gas.
[Appendix 14] The glass manufacturing method according to appendix 13, further including transferring the recovered heat to the NH₃ gas via a heat medium to heat the NH₃ gas.
[Appendix 15] The glass manufacturing method according to any one of appendixes 12 to 14, wherein a concentration of H₂O gas in a combustion gas burned by the burner is 18% by volume to 75% by volume.
[Appendix 16] The glass manufacturing method according to any one of appendixes 12 to 15, further including supplying the oxidizing gas to the burner,
   wherein, in the burner, a first burner and a second burner alternately form a flame inside the glass melting furnace,
   wherein a first regenerator recovers heat from an exhaust gas exhausted from the glass melting furnace while the second burner forms a flame inside the glass melting furnace, and the first regenerator releases heat to preheat the oxidizing gas while the first burner forms a flame inside the glass melting furnace, and
   wherein a second regenerator recovers heat from an exhaust gas exhausted from the glass melting furnace while the first burner forms a flame inside the glass melting furnace, the second regenerator releases heat to preheat the oxidizing gas while the second burner forms a flame inside the glass melting furnace, and the oxidizing gas is air or oxygen-enriched air.
[Appendix 17] The glass manufacturing method according to any one of appendixes 12 to 16, further including supplying the oxidizing gas to the burner,
   wherein the oxidizing gas is preheated through heat exchange with an exhaust gas exhausted from the glass melting furnace, and the oxidizing gas is oxygen or oxygen-enriched air.

Although the glass manufacturing apparatus and the glass manufacturing method according to the present disclosure have been described above, the present disclosure is not limited to the above-described embodiments. Various changes, modifications, substitutions, additions, deletions, and combinations are possible within the scope of the claims. Naturally, these also fall within the technical scope of the present disclosure.

Priority is claimed on Japanese Patent Application No. 2023-181582, filed October 23, 2023, the content of which is incorporated herein by reference.

### REFERENCE SIGNS LIST

1 Glass manufacturing apparatus
10 Glass melting furnace
20 Burner
30 Reactor

## Claims

1. A glass manufacturing apparatus comprising:
a reactor configured to produce at least H₂ gas through decomposition of NH₃ gas; and
a burner configured to form a flame inside a glass melting furnace by combusting a flammable gas containing the H₂ gas produced in the reactor and an oxidizing gas.

2. The glass manufacturing apparatus according to claim 1, further comprising a first heat exchanger provided in the reactor heating the NH₃ gas through heat exchange with an exhaust gas exhausted from the glass melting furnace.

3. The glass manufacturing apparatus according to claim 1, further comprising:
a second heat exchanger heating a heat medium through heat exchange with an exhaust gas exhausted from the glass melting furnace; and
a third heat exchanger provided in the reactor heating the NH₃ gas through heat exchange with the heat medium.

4. The glass manufacturing apparatus according to any one of claims 1 to 3, further comprising a first regenerator and a second regenerator,
wherein the burner has a first burner and a second burner that alternately form a flame inside the glass melting furnace,
wherein the first regenerator recovers heat from an exhaust gas exhausted from the glass melting furnace while the second burner forms a flame inside the glass melting furnace, and the first regenerator releases heat to preheat the oxidizing gas while the first burner forms a flame inside the glass melting furnace, and
wherein the second regenerator recovers heat from an exhaust gas exhausted from the glass melting furnace while the first burner forms a flame inside the glass melting furnace, and the second regenerator releases heat to preheat the oxidizing gas while the second burner forms a flame inside the glass melting furnace.

5. The glass manufacturing apparatus according to claim 4, wherein the oxidizing gas is air or oxygen-enriched air.

6. The glass manufacturing apparatus according to any one of claims 1 to 3, further comprising:
a third supply line for supplying the oxidizing gas to the burner; and
a recuperator provided in the middle of the third supply line and preheats the oxidizing gas through heat exchange with an exhaust gas exhausted from the glass melting furnace.

7. The glass manufacturing apparatus according to claim 6, wherein the oxidizing gas is pure oxygen gas or oxygen-enriched air.

8. The glass manufacturing apparatus according to any one of claims 1 to 3, wherein a concentration of H₂O gas in a combustion gas burned by the burner is 18% by volume to 75% by volume.

9. The glass manufacturing apparatus according to any one of claims 1 to 3, further comprising:
a first supply line for supplying the NH₃ gas to the reactor;
a second supply line for supplying the flammable gas produced in the reactor to the burner; and
a fourth supply line for sending the NH₃ gas to the second supply line without passing through the reactor.

10. The glass manufacturing apparatus according to any one of claims 1 to 3, further comprising:
a first supply line for supplying the NH₃ gas to the reactor;
a second supply line for supplying the flammable gas produced in the reactor to the burner; and
a separator provided in the middle of the second supply line removing at least some of N₂ gas produced in the reactor.

11. The glass manufacturing apparatus according to any one of claims 1 to 3, further comprising:
a first supply line for supplying the NH₃ gas to the reactor;
a second supply line for supplying the flammable gas produced in the reactor to the burner;
a separator provided in the middle of the second supply line removing at least some of N₂ gas produced in the reactor; and
a fourth supply line for sending the NH₃ gas to a portion of the second supply line downstream of the separator without passing through the reactor and the separator.

12. A glass manufacturing method comprising
producing at least H₂ gas through decomposition of NH₃ gas; and
forming a flame inside a glass melting furnace by combusting a flammable gas containing the produced H₂ gas and an oxidizing gas with a burner.

13. The glass manufacturing method according to claim 12, further comprising recovering heat from an exhaust gas exhausted from the glass melting furnace and heating the NH₃ gas using the recovered heat to decompose the NH₃ gas.

14. The glass manufacturing method according to claim 13, further comprising transferring the recovered heat to the NH₃ gas via a heat medium to heat the NH₃ gas.

15. The glass manufacturing method according to any one of claims 12 to 14, wherein a concentration of H₂O gas in a combustion gas burned by the burner is 18% by volume to 75% by volume.

16. The glass manufacturing method according to any one of claims 12 to 14, further comprising supplying the oxidizing gas to the burner,
wherein, in the burner, a first burner and a second burner alternately form a flame inside the glass melting furnace,
wherein a first regenerator recovers heat from an exhaust gas exhausted from the glass melting furnace while the second burner forms a flame inside the glass melting furnace, and the first regenerator releases heat to preheat the oxidizing gas while the first burner forms a flame inside the glass melting furnace, and
wherein a second regenerator recovers heat from an exhaust gas exhausted from the glass melting furnace while the first burner forms a flame inside the glass melting furnace, the second regenerator releases heat to preheat the oxidizing gas while the second burner forms a flame inside the glass melting furnace, and the oxidizing gas is air or oxygen-enriched air.

17. The glass manufacturing method according to any one of claims 12 to 14, further comprising supplying the oxidizing gas to the burner,
wherein the oxidizing gas is preheated through heat exchange with an exhaust gas exhausted from the glass melting furnace, and the oxidizing gas is oxygen or oxygen-enriched air.
